# EUROPÄISCHE PATENTSCHRIFT

(11) **EP 1 004 606 B1**
(45) Veröffentlichungstag und Bekanntmachung des Hinweises auf die Patenterteilung: **29.12.2004**
(21) Anmeldenummer: 99122083.1
(22) Anmeldetag: 16.11.1999
(51) Int. Cl.: C08G 18/10, C08G 18/50, C08K 7/10

(54) **Verfahren zur Herstellung von faserverstärkten Polyurethanharnstoff-Elastomeren**
Process for the preparation of fiber reinforced polyurethane-urea elastomers
Procédé de préparation d'élastomères polyuréthane polyurée renforcés par des fibres

(30) Priorität: 27.11.1998 DE 19854767
(43) Veröffentlichungstag der Anmeldung: 31.05.2000
(73) Patentinhaber: Bayer MaterialScience AG, 51368 Leverkusen (DE)
(72) Erfinder: Haas, Peter, Dr., 42781 Haan (DE); Meiners, Hans-Joachim, Dr., 51371 Leverkusen (DE); Dörner, Karl-Heinz, 50259 Pulheim (DE); Wisser, Heidrun, 41539 Dormagen (DE)

(56) Entgegenhaltungen:
- EP-A- 0 355 000
- EP-A- 0 590 803
- EP-A- 0 656 379
- US-A- 5 262 488
- US-A- 5 663 272

## Beschreibung

Die Erfindung betrifft ein Verfahren zur Herstellung eines durch Verstärkungsstoffe ausgerüsteten Polyurethanharnstoff-Elastomeren mit einem bestimmten Harnstoffund einem bestimmten Urethananteil sowie daraus herstellbare flächige Polyurethanformkörper.

Die Herstellung von Polyurethanharnstoff-Elastomeren durch Umsetzung von NCO-Semiprepolymeren mit Gemischen aus aromatischen Diaminen sowie höhermolekularen Hydroxy- oder Aminogruppen enthaltenden Verbindungen ist bekannt und beispielsweise in EP-225 640 beschrieben. Um bestimmte mechanische Eigenschaften bei den daraus hergestellten Formkörpern zu erreichen, müssen den Reaktionskomponenten Verstärkungsstoffe zugesetzt werden, wodurch insbesondere thermomechanische Eigenschaften verbessert und der Biege-Elastizitäts-Modul erheblich angehoben wird. Durch den Einsatz der Verstärkungsstoffe ändern sich jedoch auch die Längs- und Querschwindungseigenschaften bei den hergestellten Formkörpern.

Wünschenswert sind daher verstärkte Polyurethanharnstoff-Elastomere, die bei der Herstellung von flächigen Formkörpern, wie Kotflügel, Türen oder Heckklappen von Automobilen ein annähernd isotropes Verhalten aufzeigen, d.h. möglichst geringe unterschiedliche Längs- und Querschwindungseigenschaften zeigen.

Darüber hinaus sollen sich die aus den verstärkten Polyurethan-Elastomeren hergestellten Formkörper leicht und mit einem möglichst geringen Zusatz an Trennhilfsmitteln von den Formen trennen lassen, um möglichst hohe Taktzeiten durch ein trennfreundliches System zu gewährleisten.

Es wurde nun überraschend gefunden, daß bestimmte, durch Verstärkungsstoffe ausgerüstete Polyurethanharnstoff-Elastomere eine problemlose Verarbeitung hinsichtlich der Herstellung von flächigen Formkörpern mit einwandfreier Oberfläche und gutem Entformungsverhalten gewährleisten, verbunden mit einem verbesserten Längs- und Querschwindungsverhalten.

Gegenstand der vorliegenden Erfindung ist daher ein Verfahren zur Herstellung eines durch Verstärkungsstoffe ausgerüsteten Polyurethanharnstoff-Elastomeren mit einem Harnstoffanteil im Bereich von 70 bis 95 Mol-% und einem Urethananteil im Bereich von 5 bis 30 Mol-%, bezogen auf Mol-% eines NCO-Äquivalents, durch Umsetzung eines Reaktionsgemisches aus einer A-Komponente, bestehend aus
A1) aromatischen Diaminen, die zumindest in jeweils einer ortho-Stellung zu den Aminogruppen einen Alkylsubstituenten aufweisen,
A2) einer aliphatischen Reaktionskomponente, bestehend aus mindestens einem Hydroxyl- und/oder primäre Aminogruppen aufweisenden Polyether- und/oder Polyesterpolyol der Molmasse 500 bis 18 000,
A3) einem Verstärkungsstoff sowie gegebenenfalls
A4) bekannten Katalysatoren oder Zusatzstoffen
sowie einer B-Komponente, bestehend aus
B1) einer Polyisocyanatkomponente, bestehend aus einem verflüssigten Polyisocyanat oder Polyisocyanatgemisch der Diphenylmethanreihe und
B2) einer Polyolkomponente mit einer mittleren Molmasse von 500 bis 18 000, bestehend aus mindestens einem, gegebenenfalls organische Füllstoffe enthaltenden Polyether- und/oder Polyesterpolyol,
dadurch gekennzeichnet, daß die Komponente A2) eine Funktionalität von 4 bis 8 besitzt und die Komponente B2) eine Funktionalität von 3 bis 8 hat, wobei die A-Komponente und die B-Komponente in einem solchen stöchiometrischen Mengenverhältnis umgesetzt werden, daß die Isocyanatkennzahl des erhaltenen Elastomeren im Bereich von 80 bis 120 liegt und die über die B-Komponente eingebrachte Polyolkomponente B2) 10 bis 90 Mol-% des Urethananteils darstellt.

Bevorzugt werden nach dem erfindungsgemäßen Verfahren verstärkte Polyurethanhamstoff-Elatomere hergestellt mit einem Harnstoffanteil von 75 bis 90 Mol-% und einem Urethananteil von 10 bis 25 Mol-%, bezogen auf Mol-% eines NCO-Äquivalents.

Nach dem erfindungsgemäßen Verfahren ist es weiterhin bevorzugt, daß die A-Komponente und die B-Komponente in einem solchen Mengenverhältnis umgesetzt werden, daß die Isocyanatkennzahl des erhaltenen Elastomeren bevorzugt im Bereich von 90 bis 115 liegt und die über die B-Komponente eingebrachte Polyolkomponente B2) 30 bis 85 % des Urethananteils darstellt.

Als Verstärkungsstoffe werden bevorzugt solche Verstärkungsstoffe eingesetzt, die anorganischer Natur sind und eine Plättchen- und/oder Nadelstruktur aufweisen. Insbesondere handelt es sich dabei um Silikate der II. und III. Hauptgruppe des Periodensystems, wie Calciumsilikat vom Wollastonittyp und Aluminiumsilikate vom Glimmer- oder Kaolintyp. Solche silikatischen Verstärkungsstoffe sind bekannt unter der Bezeichnung Gruppen-, Ring-, Ketten- oder Bandsilikate z.B. in Hollemann-Wiberg, W. de Gruyter Verlag (1985) 768 bis 778 beschrieben.

Diese Verstärkungsstoffe weisen einen Durchmesser bzw. eine Tafelhöhe oder Dicke von 2 bis 30 µm sowie eine Längenausdehnung von 10 bis 600 µm auf und haben einen Längen-/Durchmesserquotienten der im Bereich 5:1 bis 35:1, bevorzugt 7:1 bis 30:1, liegt. Der Durchmesser kugeliger Anteile liegt bei 5 bis 150, bevorzugt 20 bis 100 µm.

Die genannten Verstärkungsstoffe werden üblicherweise in Mengen von 10 bis 35 Gew.-%, bevorzugt 10 bis 30 Gew.-%, bezogen auf die Gesamtmenge der Komponenten A und B bei dem erfindungsgemäßen Verfahren zugesetzt.

Von Bedeutung ist bei dem erfindungsgemäßen Verfahren, daß die eingesetzten Verstärkungsstoffe eine besonders gute Wirkung dann zeigen hinsichtlich der Oberflächenbeschaffenheit der herzustellenden Formkörper sowie hinsichtlich der geringen Unterschiede in Längs- und Querschwindung, wenn die Verstärkungsstoffe in Kombination mit einer aliphatischen Reaktionskomponente A2) eingesetzt wird, die eine Funktionalität von 4 bis 8, bevorzugt 4,5 bis 7,5, besonders bevorzugt 4,5 bis 7,0, aufweist (auf der A-Seite) und die Polyolkomponente B2) auf der B-Seite eine Funktionalität von 3 bis 8, bevorzugt 3 bis 7, besitzt.

Wie oben beschrieben, besteht das erfindungsgemäße Verfahren darin, daß man eine sogenannte A-Komponente mit einer sogenannten B-Komponente umsetzt, wobei bevorzugt die A-Komponente die erwähnten Verstärkungsstoffe enthält.

Als Komponente A1) kommen aromatische Diamine in Betracht, die zumindestens in jeweils einer ortho-Stellung zu den Aminogruppen einen Alkylsubstituenten aufweisen und die ein Molekulargewicht von 122 bis 400 besitzen. Besonders bevorzugt sind solche aromatischen Diamine, die in ortho-Stellung zu der ersten Aminogruppe mindestens einen Alkylsubstituenten und in ortho-Stellung zu der zweiten Aminogruppe zwei Alkylsubstituenten mit jeweils 1 bis 4, vorzugsweise 1 bis 3, Kohlenstoffatomen aufweisen. Ganz besonders bevorzugt sind solche, die in jeweils mindestens einer ortho-Stellung zu den Aminogruppen einen Ethyl-, n-Propyl- und/oder iso-Propylsubstituenten und gegebenenfalls in weiteren ortho-Stellungen zu den Aminogruppen Methylsubstituenten aufweisen. Beispiele für derartige Diamine sind 2,4-Diaminomesitylen, 1,3,5-Triethyl-2,4-diaminobenzol sowie dessen technische Gemische mit 1-Methyl-3,5-diethyl-2,6-diaminobenzol oder 3,5,3',5'-Tetraisopropyl-4,4'-diaminodiphenylmethan. Selbstverständlich können die Gemische untereinander ebenfalls eingesetzt werden. Besonders bevorzugt handelt es sich bei der Komponente A1) um 1-Methyl-3,5-diethyl-2,4-diaminobenzol oder um dessen technische Gemische mit 1-Methyl-3,5-diethyl-2,6-diaminobenzol (DETDA).

Die Komponente A2) besteht aus mindestens einem aliphatisch gebundenen Hydroxyl- und/oder primäre Aminogruppen aufweisenden Polyether- oder Polyesterpolyol der Molmasse 500 bis 18 000, bevorzugt 1000 bis 16 000, vorzugsweise 1500 bis 15 000. Die Komponente A2) besitzt die zuvor erwähnten Funktionalitäten. Die Polyetherpolyole können in an sich bekannter Art durch Alkoxylierung von Startermolekülen oder deren Gemischen entsprechender Funktionalität hergestellt werden, wobei zur Alkoxylierung insbesondere Propylenoxid und Ethylenoxid verwendet werden. Geeignete Starter bzw. Startergemische sind Succrose, Sorbit, Pentaerythrit, Gycerin, Trimethylolpropan, Propylenglykol sowie Wasser. Bevorzugt sind solche Polyetherpolyole, deren Hydroxygruppen zumindestens zu 50 %, vorzugsweise mindestens zu 70 %, insbesondere ausschließlich aus primären Hydroxygruppen bestehen.

Als Polyesterpolyole kommen insbesondere solche in Betracht, die sich aufbauen aus den dafür bekannten Dicarbonsäuren, wie Adipinsäure, Phthalsäure, sowie den mehrwertigen Alkoholen, wie Ethylenglykol, 1,4-Butandiol und gegebenenfalls anteilig Glycerin und Trimethylolpropan.

Solche Polyether und Polyesterpolyole sind beispielsweise beschrieben in Kunststoffhandbuch 7, Becker/Braun, Carl Hanser Verlag, 3. Auflage, 1993.

Weiterhin können als Komponente A2) primäre Aminogruppen aufweisende Polyether- und/oder Polyesterpolyole eingesetzt werden, wie sie beispielsweise beschrieben werden in EP 219 035 und als ATPE (Amino-terminierte Polyether) bekannt sind.

Insbesondere eignen sich als Aminogruppen aufweisende Polyether- und/oder Polyesterpolyole die sogenannten Jeffamine® der Firma Texaco, die aufgebaut sind aus α,ω-Diaminopolypropylenglykolen.

Als Komponente A4) können bei dem erfindungsgemäßen Verfahren die bekannten Katalysatoren für die Urethan- und Harnstoffreaktion eingesetzt werden, wie tertiäre Amine oder die Zinn(II)- oder Zinn(IV)-Salze höherer Carbonsäuren. Als weitere Zusatzstoffe kommen Stabilisatoren, wie die bekannten Polyethersiloxane oder Trennmittel, wie Zinkstearat, zum Einsatz. Die bekannten Katalysatoren oder Zusatzstoffe sind beispielsweise beschrieben in Kapitel 3.4 des Kunststoffhandbuchs J. Polyurethane, Carl Hanser Verlag (1993), S. 95 bis 119 und können in den üblichen Mengen eingesetzt werden.

Die sogenannte B-Komponente stellt ein NCO-Prepolymer auf Basis der Polyisocyanatkomponente B1) und der Polyolkomponente B2) dar und weist einen NCO-Gehalt von 8 bis 26 Gew.-%, vorzugsweise 12 bis 25 Gew.-%, aus.

Bei den Polyisocyanaten B1) handelt es sich um gegebenenfalls durch chemische Modifizierung verflüssigte Polyisocyanate oder Polyisocyanatgemische der Diphenylmethanreihe. Der Begriff "Polyisocyanat der Diphenylmethanreihe" stellt den Oberbegriff für alle Polyisocyanate dar, wie sie bei der Phosgenierung von Anilin/Formaldehyd-Kondensaten gebildet werden und in den Phosgenierungsprodukten als Einzelkomponenten vorliegen. Der Begriff "Polyisocyanatgemisch der Diphenylmethanreihe" steht für beliebige Gemische von Polyisocyanaten der Diphenylmethanreihe, d.h. beispielsweise für die genannten Phosgenierungsprodukte, für die Gemische, die bei der destillativen Auftrennung derartiger Gemische als Destillat oder Destillationsrückstand anfallen und für beliebige Abmischungen von Polyisocyanaten der Diphenylmethanreihe.

Typische Beispiele für geeignete Polyisocyanate B1) sind 4,4'-Diisocyanatodiphenylmethan, dessen Gemische mit 2,2'- und insbesondere 2,4'-Diisocyanatodiphenylmethan, Gemische dieser Diisocyanatodiphenylmethan-Isomeren mit ihren höheren Homologen, wie sie bei der Phosgenierung von Anilin/Formaldehyd-Kondensaten anfallen, durch partielle Carbodiimidisierung der Isocyanatgruppen der genannten Di- und/oder Polyisocyanate modifizierte Di- und/oder Polyisocyanate oder beliebige Gemische derartiger Polyisocyanate.

Als Komponente B2) geeignet sind insbesondere die dieser Definition entsprechenden Polyether- oder Polyesterpolyole bzw. Gemische derartiger Polyhydroxylverbindungen. In Betracht kommen beispielsweise entsprechende Polyetherpolyole, die gegebenenfalls organische Füllstoffe in dispergierter Form enthalten. Bei diesen dispergierten Füllstoffen handelt es sich beispielsweise um Vinylpolymerisate, wie sie z.B. durch Polymerisation von Acrylnitril und Styrol in den Polyetherpolyolen als Reaktionsmedium entstehen (US-PS 33 83 351, 33 04 273, 35 23 093, 31 10 695, DE-PS 11 52 536) oder um Polyharnstoffe oder Polyhydrazide, wie sie durch eine Polyadditionsreaktion in den Polyetherpolyolen als Reaktionsmedium aus organischen Diisocyanaten und Diaminen bzw. Hydrazin entstehen (DE-PS 12 60 142, DE-OS 24 23 984, 25 19 004, 25 13 815, 25 50 833, 25 50 862, 26 33 293 oder 25 50 796). Grundsätzlich sind als Komponente B2) Polyetherpolyole oder Polyesterpolyole der bereits oben unter A2) genannten Art geeignet, sofern sie den zuletzt genannten Kenndaten entsprechen.

Die Polyolkomponente B2) weist eine mittlere Molmasse von bevorzugt 1000 bis 16 000, insbesondere 2000 bis 16 000, bei einer mittleren Hydroxyfunktionalität von 3 bis 8, bevorzugt 3 bis 7 auf.

Zur Herstellung der NCO-Semiprepolymeren B) werden vorzugsweise die Komponenten B1) und B2) in solchen Mengenverhältnissen zur Reaktion gebracht (NCO-Überschuß), daß NCO-Semiprepolymere mit dem oben genannten NCO-Gehalt resultieren. Die diesbezügliche Umsetzung erfolgt im allgemeinen innerhalb des Temperaturbereichs von 25 bis 100°C. Bei der Herstellung der NCO-Semiprepolymeren wird vorzugsweise die Gesamtmenge der Polyisocyanatkomponete B1) mit vorzugsweise der Gesamtmenge der zu Herstellung der NCO-Semiprepolymeren vorgesehenen Komponente B2) umgesetzt.

Die Durchführung des erfindungsgemäßen Verfahrens erfolgt nach der bekannten Reaktionsspritzgußtechnik (RSG-Verfahren, "RIM-process"), wie sie beispielsweise in DE-AS 2 622 951 (US 4 218 543) oder DE-OS 39 14 718 beschrieben ist. Die Mengenverhältnisse der Komponenten A) und B) entsprechen hierbei den stöchiometrischen Verhältnissen mit einer NCO-Kennzahl von 80 bis 120. Die Menge des in die Form eingebrachten Reaktionsgemischs wird im übrigen so bemessen, daß die Formkörper eine Dichte von mindestens 0,8, vorzugsweise 1,0 bis 1,4 g/cm³ aufweisen. Die Dichte der resultierenden Formkörper hängt selbstverständlich in starkem Maß von der Art und dem Gewichtsanteil der mitverwendeten Füllkörper ab. Im allgemeinen handelt es sich bei den erfindungsgemäßen Formkörpern um mikrozellulare Elastomere, d.h. um keine echten Schaumstoffe mit dem bloßen Auge sichtbarer Schaumstruktur. Dies bedeutet, daß gegebenenfalls mitverwendete organische Treibmittel weniger die Funktion eines echten Treibmittels als vielmehr die Funktion eines Fließmittels ausüben.

Die Ausgangstemperatur des in die Form eingebrachten Reaktionsgemischs aus den Komponenten A) und B) liegt im allgemeinen bei 20 bis 80, vorzugsweise 30 bis 70°C. Die Temperatur der Form liegt im allgemeinen bei 30 bis 130, vorzugsweise 40 bis 80°C. Bei dem zum Einsatz gelangenden Formwerkzeugen handelt es sich um solche der an sich bekannten Art, vorzugsweise aus Aluminium oder Stahl oder um metallgespritzte Epoxidwerkzeuge. Zur Verbesserung der Entformungseigenschaften können die Innenwände der verwendeten Form gegebenenfalls mit bekannten äußeren Formtrennmitteln beschichtet werden.

Die in der Form entstehenden Formkörper können im allgemeinen nach einer Formstandzeit von 5 bis 180 Sekunden entformt werden. Gegebenenfalls schließt sich an der Entformung ein Tempern bei einer Temperatur von ca. 60 bis 180°C während eines Zeitraums von 30 bis 120 Minuten an.

Die nach dem erfindungsgemäßen Verfahren erhältlichen vorzugsweise flächigen PU-Formkörper eignen sich insbesondere zur Herstellung von flexiblen Automobilstoßstangen bzw. von flexiblen Karosserieelementen wie Türen und Heckklappen oder Kotflügeln von Automobilen.

### Beispiele

### Ausgangsmaterialien

### Semiprepolymer 1

91,8 Gew.-Teile 4,4'-Diisocyanatodiphenylmethan werden bei 90°C mit 66,4 Gew.-Teilen des Polyetherpolyols 3 der Funktionalität 3 umgesetzt. NCO-Gehalt nach 2 Stunden: 18,0 %

### Semiprepolymer 2

96,6 Gew.-Teile 4,4'-Diisocyanatodiphenylmethan werden bei 90°C mit 73,4 Gew.-Teilen des Polyetherpolyols 1 der Funktionalität 6 umgesetzt. NCO-Gehalt nach 2 Stunden: 18,1 %

### Polyol 1

Polyetherpolyol der OH-Zahl 28, hergestellt durch Propoxylierung von Sorbit als hexafunktionellem Starter und anschließende Ethoxylierung im Verhältnis 83:17 mit überwiegend primären OH-Gruppen.

### Polyol 2

Polyetherpolyol der OH-Zahl 35, hergestellt durch Propoxylierung des trifunktionellen Starters Trimethylolpropan mit Propylenoxid und anschließender Ethoxylierung im Verhältnis 83:17 mit überwiegend primären OH-Gruppen.

### Polyol 3

Polyetherpolyol der OH-Zahl 45 auf der Basis von Trimethylolpropan als trifunktionellem Starter, hergestellt durch Addition von Propylenoxid und Ethylenoxid im Verhältnis 85:15 mit überwiegend sekundären OH-Gruppen.

### DETDA

Mischung aus 65 Gew.% 1-Methyl-3,5-diethyl-2,4-diaminobenzol und 35 Gew.-% 1-Methyl-3,5-diethyl-2,6-diaminobenzol

Die Verarbeitung der im folgenden beschriebenen Rezepturen erfolgte durch Reaktionsspritzgußtechnik. Die A- und die B-Komponente werden in einem Hochdruckdosiergerät nach intensiver Vermischung in einem zwangsgesteuerten Mischkopf in ein geheiztes Plattenwerkzeug einer Formtemperatur von 60°C der Abmessungen 300 x 200 x 3 mm über einen Staubalkenanguß gedrückt.

Die Temperatur der A-Komponente betrug 60°C, die Temperatur der B-Komponente betrug 50°C.

Die mechanischen Werte wurden nach Tempern von 30 Minuten bei 120°C in einem Umlufttrockenschrank und anschließender Lagerung von 24 Stunden gemessen.

Vor jeder Serie wurde das Werkzeug mit dem Formtrennmittel RTWC 2006 der Fa. Chem Trend behandelt.

**Tabelle 1**

| Rezeptur Nr. | 1 | 2 | 3 | 4 | 5 | 6 | 7 | 8 | 9 | 10 | 11 | 12 |
|---|---|---|---|---|---|---|---|---|---|---|---|---|
| Polyol 1 | 59,5 | - | 59,5 | - | 59,5 | - | 59,5 | - | 59,5 | - | 59,5 | 59,5 |
| Polyol 2 (Vergleich) | - | 59,5 | - | 59,5 | - | 59,5 | - | 59,5 | - | 59,5 | - | |
| DETDA | 35,0 | 35,0 | 35,0 | 35,0 | 35,0 | 35,0 | 35,0 | 35,0 | 35,0 | 35,0 | 35,0 | 35,0 |
| Zn-Stearat | 2,0 | 2,0 | 2,0 | 2,0 | 2,0 | 2,0 | 2,0 | 2,0 | 2,0 | 2,0 | 2,0 | 2,0 |
| Jeffamin D400 (Fa. Texaco) | 3,0 | 3,0 | 3,0 | 3,0 | 3,0 | 3,0 | 3,0 | 3,0 | 3,0 | 3,0 | 3,0 | 3,0 |
| Dabco 33 LV | 0,3 | 0,3 | 0,3 | 0,3 | 0,3 | 0,3 | 0,3 | 0,3 | 0,3 | 0,3 | 0,3 | 0,3 |
| DBTDL | 0,2 | 0,2 | 0,2 | 0,2 | 0,2 | 0,2 | 0,2 | 0,2 | 0,2 | 0,2 | 0,2 | 0,2 |
| Wollastonit 1) | 52 | 52 | 69 | 69 | - | - | 8 | 8 | - | - | 52 | - |
| Glimmer 2) | - | - | - | - | 52 | 52 | 52 | 52 | - | - | - | - |
| Glasfaser 3) | - | - | - | - | - | - | - | - | 60 | 60 | - | 60 |
| Semiprep. 1 | 108 | 108 | 108 | 108 | 108 | 108 | 108 | 108 | 108 | 108 | - | - |
| Semiprep. 2 | - | - | - | - | - | - | - | - | - | - | 108 | 108 |
| Füllstoff in Elastomer (%) | 20 | 20 | 25 | 25 | 20 | 20 | 23 | 23 | 23 | 23 | 20 | 20 |
| Index | 105 | 105 | 105 | 105 | 105 | 105 | 105 | 105 | 105 | 105 | 105 | 105 |

**Tabelle 2**

| Rezeptur Nr. | 1 | 2 | 3 | 4 | 5 | 6 | 7 | 8 | 9 | 10 | 11 | 12 |
|---|---|---|---|---|---|---|---|---|---|---|---|---|
| Formteilbeurteilung: | | | | | | | | | | | | |
| Hautablösung | nein | st | nein | st | nein | st | nein | st | nein | nein | nein | nein |
| Oberfläche | sehr glatt | gst | sehr glatt | gst | sehr glatt | gst | sehr glatt | gst | glatt | glatt | sehr glatt | glatt |
| Trennverhalten | s.gut | mäßig | s.gut | mäßig | s.gut | mäßig | s.gut | mäßig | gut | gut | s.gut | s.gut |
| Formaufbau | nein | st | nein | st | nein | st | nein | st | nein | nein | nein | nein |
| Probendicke (mm) | 3 | 3 | 3 | 3 | 3 | 3 | 3 | 3 | 3 | 3 | 3 | 3 |
| Shore D-Härte DIN 53505 | 65 | 65 | 66 | 65 | 66 | 65 | 65 | 65 | 65 | 65 | 65 | 65 |
| Zugfestigkeit DIN 53504 (MPa) | 27 | ng | 22 | ng | 30 | ng | 30 | ng | 28 | 30 | 28 | 29 |
| Bruchdehnung (%) DIN 53504 | 120 | ng | 100 | ng | 70 | ng | 65 | ng | 120 | 120 | 120 | 120 |
| Biegemodul längs (MPa) | 1800 | ng | 2200 | ng | 1500 | ng | 1800 | ng | 2200 | 2150 | 1900 | 2100 |
| Biegemodul quer (MPa) (ASTM-D790) | 1000 | ng | 1100 | ng | 1100 | ng | 1300 | ng | 1100 | 1100 | 1100 | 1100 |
| Therm. Aus dehnung [10⁻⁶/k] (CLTE -20/100°C) (l/q) DIN 52 328 | 50/ 120 | ng | 45/ 120 | ng | 80/ 90 | ng | 60/ 75 | ng | 40/ 120 | 40/ 120 | 50/ 110 | 40/ 120 |
| Schwindung (l/q)(%) | 0,4/ 0,81 | ng | 0,32/ 0,87 | ng | 0,65/ 0,80 | ng | 0,6/ 0,7 | ng | 0,35/ 0,9 | 0,35/ 0,9 | 0,4/ 0,8 | 0,35/ 0,9 |

| Elastomeraufbau: | | |
|---|---|---|
| 1) | Hamstoffgehalt pro NCO-Äquivalent (Mol-%) | 89 % |
| 2) | Urethangehalt pro NCO-äquivalent (Mol-%) | 11 % |
| 3) | Urethangehalt in Prepolymer (% Anteil von 2) | 44 % |

### Abkürzungen in Tabelle 2:

| | | |
|---|---|---|
| l | = | längs |
| q | = | quer |
| s | = | sehr |
| st | = | stark |
| gst | = | gestört |
| ng | = | nicht geprüft |

Wollastonit 1) Tremin 939-948 der Quarzwerte D-50226 Frechen
Glimmer 2) Himod 270 SME der Fa. KMG Minerals, Kingsmountain N.C. (USA)
Glasfaser 3) MF 7980 der Bayer AG

Im Gegensatz zu Beispiel 9 mit dem Füllstoff Glasfaser sind die Füllstoffe Wollastonit und Glimmer mit dem Polyol 2 einer Funktionalität 3 als Reaktivkomponente der A-Seite nicht zu Formteilen ohne Hautablösung, mit glatter Oberfläche und brauchbarem Trennverhalten verarbeitbar, wie die Beispiele 2, 4, 6 und 8 zeigen. Dies gelingt jedoch überraschend durch Verwendung der erfindungsgemäßen Polyolkomponente 1 einer Funktionalität von 6 in den Beispielen 1, 3, 5, 7 und 11. Sie zeigen selbst bei hohen Füllgraden eine sehr glatte Oberflächenstruktur des Formteils und sind daher leichter lackierfähig. Durch Einsatz des hexafunktionellen Polyols zur Bildung des Semiprepolymers 2 im Beispiel 11 wird das Trennverhalten noch vorteilhafter beeinflußt; dieser Befund wird auch im Beispiel 12 mit dem Füllstoff Glasfaser festgestellt, wenn hexafunktionelle Polyole auf der A- und B-Seite verwendet werden. Durch Verwendung der erfindungsgemäßen Polyole hoher Funktionalität auf der A-Seite können die bezüglich der Verarbeitungseigenschaften als problematisch geltenden Gruppen-, Ring-, Kettenoder Bandsilikate wie α- oder β-Wollastonit, Glimmer oder Kaolin zum entsprechend gefüllten Polyurethanharnstoffelastomeren von einwandfreier Oberfläche und guten Trenneigenschaften verarbeitet werden. Durch Verwendung von hochfunktionellen Polyolen auch auf der Seite der Semiprepolymeren (B-Seite) lassen sich die Verarbeitungsparameter noch günstiger beeinflussen, so daß die Fertigung von Formteilen entformungsfreundlicher und somit auch bei langen Laufzeiten hohe Stückzahlen ohne Formreinigung ermöglicht werden. In einem Werkzeug der Größe 300 x 200 x 3 mm mit eingebauter mehrfacher Umlenkung des Fließwegs der Reaktionsmischung treten keine Störungen in der Matrix auf, obwohl die hohe Funktionalität hier Probleme erwarten läßt.

Die Verarbeitung ist jedoch fließtechnisch völlig problemlos. Gemäß dem erfindungsgemäßen Verfahren können flexible Karosserieelemente wie Türen, Heckklappen und Kotflügel sowie Stoßstangen und Prallschutzleisten hergestellt werden, die nach üblichen Lackierverfahren infolge thermischer Belastung keinen Abfall in ihren mechanischen Eigenschaften sowie eine hohe Maßhaltigkeit zeigen.

## Patentansprüche

1. Verfahren zur Herstellung eines durch Verstärkungsstoffe ausgerüsteten Polyurethanharnstoff-Elastomeren mit einem Hamstoffanteil im Bereich von 70 bis 95 Mol-% und einem Urethananteil im Bereich von 5 bis 30 Mol-%, bezogen auf Mol-% eines NCO-Äquivalents, durch Umsetzung eines Reaktionsgemisches aus einer A-Komponente, bestehend aus
A1) aromatischen Diaminen, die zumindest in jeweils einer ortho-Stellung zu den Aminogruppen einen Alkylsubstituenten aufweisen,
A2) einer aliphatischen Reaktionskomponente, bestehend aus mindestens einem Hydroxyl- und/oder primäre Aminogruppen aufweisenden Polyether- und/oder Polyesterpolyol der Molmasse 500 bis 18 000,
A3) einem Verstärkungsstoff sowie gegebenenfalls
A4) bekannten Katalysatoren oder Zusatzstoffen
sowie einer B-Komponente, bestehend aus
B1) einer Polyisocyanatkomponente, bestehend aus einem verflüssigten Polyisocyanat oder Polyisocyanatgemisch der Diphenylmethanreihe und
B2) einer Polyolkomponente mit einer mittleren Molmasse von 500 bis 18 000, bestehend aus mindestens einem, gegebenenfalls organische Füllstoffe enthaltenden Polyether- und/oder Polyesterpolyol,
**dadurch gekennzeichnet, daß** die Komponente A2) eine Funktionalität von 4 bis 8 besitzt und
die Komponente B2) eine Funktionalität von 3 bis 8 hat, wobei die A-Komponente und die B-Komponente in einem solchen stöchiometrischen Mengenverhältnis umgesetzt werden, daß die Isocyanatkennzahl des erhaltenen Elastomeren im Bereich von 80 bis 120 liegt und die über die B-Komponente eingebrachte Polyolkomponente B2) 10 bis 90 Mol-% des Urethananteils darstellt.

2. Verfahren nach Anspruch 1, **dadurch gekennzeichnet, daß** als Verstärkungsstoffe anorganische Verstärkungsstoffe eingesetzt werden die eine Plättchenund/oder Nadelstruktur aufweisen.

3. Verfahren nach Ansprüchen 1 und 2, **dadurch gekennzeichnet, daß** als Verstärkungsstoffe Silikate der II. und III. Hauptgruppe des Periodensystems eingesetzt werden.

4. Verfahren nach Ansprüchen 1 bis 3, **dadurch gekennzeichnet, daß** als Verstärkungsstoffe Wollastonit, Glimmer und/oder Kaolin eingesetzt werden.

5. Verfahren nach Ansprüchen 1 bis 4, **dadurch gekennzeichnet, daß** die Verstärkungsstoffe in Mengen von 10 bis 35 Gew.-%, bezogen auf die Gesamtmenge der Komponenten A) und B) eingesetzt werden.

6. Durch Verstärkungsstoffe ausgerüstete Polyurethanharnstoff-Elastomere mit einem Harnstoffanteil im Bereich von 70 bis 95 Mol-% und einem Urethananteil im Bereich von 5 bis 30 Mol-%, bezogen auf Mol-% eines NCO-Äquivalents, durch Umsetzung eines Reaktionsgemisches aus einer A-Komponente, bestehend aus
A1) aromatischen Diaminen, die zumindest in jeweils einer ortho-Stellung zu den Aminogruppen einen Alkylsubstituenten aufweisen,
A2) einer aliphatischen Reaktionskomponente, bestehend aus mindestens einem Hydroxyl- und/oder primäre Aminogruppen aufweisenden Polyether- und/oder Polyesterpolyol der Molmasse 500 bis 18 000,
A3) einem Verstärkungsstoff sowie gegebenenfalls
A4) bekannten Katalysatoren oder Zusatzstoffen
sowie einer B-Komponente, bestehend aus
B1) einer Polyisocyanatkomponente, bestehend aus einem verflüssigten Polyisocyanat oder Polyisocyanatgemisch der Diphenylmethanreihe und
B2) einer Polyolkomponente mit einer mittleren Molmasse von 500 bis 18 000, bestehend aus mindestens einem, gegebenenfalls organische Füllstoffe enthaltenden Polyether- und/oder Polyesterpolyol,
**dadurch gekennzeichnet, daß** die Komponente A2) eine Funktionalität von 4 bis 8 besitzt und
die Komponente B2) eine Funktionalität von 3 bis 8 hat, wobei die A-Komponente und die B-Komponente in einem solchen stöchiometrischen Mengenverhältnis umgesetzt werden, daß die Isocyanatkennzahl des erhaltenen Elastomeren im Bereich von 80 bis 120 liegt und die über die B-Komponente eingebrachte Polyolkomponente B2) 10 bis 90 Mol-% des Urethananteils darstellt.

7. Verwendung des nach Anspruch 1 hergestellten Polyurethanharnstoff-Elastomeren zur Herstellung von flächigen Polyurethanformkörpern.

## Claims

1. Process for the production of a polyurethaneurea elastomer with incorporated reinforcing materials having a urea content in the range from 70 to 95 mol% and a urethane content in the range from 5 to 30 mol%, relative to mol% of an NCO equivalent, by reacting a reaction mixture comprising an A component consisting of
A1) aromatic diamines having an alkyl substituent in at least one ortho position relative to the amino groups,
A2) an aliphatic reaction component consisting of at least one polyether polyol and/or polyester polyol of a molecular weight of 500 to 18000 and containing hydroxyl and/or primary amino groups,
A3) a reinforcing material, optionally together with
A4) known catalysts or additives
as well as a B component consisting of
B1) a polyisocyanate component consisting of a liquefied polyisocyanate or polyisocyanate mixture of the diphenylmethane series and
B2) a polyol component having an average molecular weight of 500 to 18000, consisting of at least one polyether polyol and/or polyester polyol optionally containing organic fillers,
**characterised in that** component A2) has a functionality of 4 to 8 and
component B2) has a functionality of 3 to 8, wherein the A component and the B component are reacted in a stoichiometric quantity ratio such that the isocyanate index of the resultant elastomer is in the range from 80 to 120 and the polyol component B2) introduced with the B component constitutes 10 to 90 mol% of the urethane content.

2. Process according to claim 1, **characterised in that** inorganic reinforcing materials having a lamellar and/or acicular structure are used as the reinforcing materials.

3. Process according to claims 1 and 2, **characterised in that** silicates of main groups II and III of the periodic system are used as the reinforcing materials.

4. Process according to claims 1 to 3, **characterised in that** wollastonite, mica and/or kaolin are used as the reinforcing materials.

5. Process according to claims 1 to 4, **characterised in that** the reinforcing materials are used in quantities of 10 to 35 wt.%, relative to the total quantity of components A) and B).

6. Polyurethaneurea elastomers with incorporated reinforcing materials having a urea content in the range from 70 to 95 mol% and a urethane content in the range from 5 to 30 mol%, relative to mol% of an NCO equivalent, by reacting a reaction mixture comprising an A component consisting of
A1) aromatic diamines having an alkyl substituent in at least one ortho position relative to the amino groups,
A2) an aliphatic reaction component consisting of at least one polyether polyol and/or polyester polyol of a molecular weight of 500 to 18000 and containing hydroxyl and/or primary amino groups,
A3) a reinforcing material, optionally together with
A4) known catalysts or additives
as well as a B component consisting of
B1) a polyisocyanate component consisting of a liquefied polyisocyanate or polyisocyanate mixture of the diphenylmethane series and
B2) a polyol component having an average molecular weight of 500 to 18000, consisting of at least one polyether polyol and/or polyester polyol optionally containing organic fillers,
**characterised in that** component A2) has a functionality of 4 to 8
and component B2) has a functionality of 3 to 8, wherein the A component and the B component are reacted in a stoichiometric quanity ratio such that the isocyanate index of the resultant elastomer is in the range from 80 to 120 and the polyol component B2) introduced with the B component constitutes 10 to 90 mol% of the urethane content.

7. Use of the polyurethaneurea elastomers produced according to claim 1 for the production of extensive polyurethane mouldings.

## Revendications

1. Procédé de préparation d'élastomères polyuréthane-urée contenant des matières de renforcement, comportant une proportion d'urée dans la plage de 70 à 95 moles % en poids et une proportion d'uréthane dans la plage de 5 à 30 moles % en poids, rapporté au pourcentage molaire d'un équivalent NCO, par réaction d'un mélange réactionnel comportant un composant A, contenant :
A1) des diamines aromatiques, qui présentent dans au moins une position ortho par rapport aux groupes amino, un substituant alkyle,
A2) un composant de réaction aliphatique constitué d'au moins un polyéther et/ou polyesterpolyol présentant des groupes hydroxyle et/ou amino primaires, d'une masse moléculaire de 500 à 18 000,
A3) une matière de renforcement et, le cas échéant,
A4) des catalyseurs ou des additifs connus,
ainsi qu'un composant B, contenant :
B1) un composant polyisocyanate, constitué d'un polyisocyanate ou d'un mélange de polyisocyanates liquéfié de la série du diphénylméthane, et
B2) un composant polyol d'une masse moléculaire moyenne de 500 à 18 000, constitué d'au moins un polyéther- et/ou polyesterpolyol, contenant le cas échéant des charges organiques,
**caractérisé en ce que** le composant A2) possède une fonctionnalité de 4 à 8 et le composant B2) une fonctionnalité de 3 à 8, le composant A et le composant B réagissant dans un rapport stoechiométrique tel que l'indice d'isocyanate de l'élastomère obtenu se trouve dans la plage de 80 à 120 et le composant polyol B2) introduit par l'intermédiaire du composant B représente 10 à 90 moles % de la fraction uréthane.

2. Procédé selon la revendication 1, **caractérisé en ce que** l'on utilise, comme matières de renforcement, des matières de renforcement inorganiques qui présentent une structure en plaquettes et/ou en aiguilles.

3. Procédé selon les revendications 1 et 2, **caractérisé en ce que** l'on utilise, comme matières de renforcement, des silicates des groupes principaux II et III du Système Périodique.

4. Procédé selon les revendications 1 à 3, **caractérisé en ce que** l'on utilise, comme matières de renforcement, la wollastonite, le mica et/ou le kaolin.

5. Procédé selon les revendications 1 à 4, **caractérisé en ce que** les matières de renforcement sont utilisées dans les proportions de 10 à 35 % en poids, rapporté à la quantité totale des composants A) et B).

6. Elastomère polyuréthane-urée contenant des matières de renforcement comportant une proportion d'urée dans la plage de 70 à 95 moles % et une proportion d'uréthane dans la plage de 5 à 30 moles %, rapporté au pourcentage molaire d'un équivalent NCO, par réaction d'un mélange réactionnel constitué d'un composant A, comportant:
A1) des diamines aromatiques qui présentent au moins dans une position ortho par rapport aux groupes amino, un substituant alkyle,
A2) un composant de réaction aliphatique constitué d'au moins un polyéther et/ou polyesterpolyol présentant des groupes hydroxyle et/ou amino primaires, d'une masse moléculaire de 500 à 18 000,
A3) une matière de renforcement et, le cas échéant,
A4) des catalyseurs ou des additifs connus,
ainsi qu'un composant B, constitué de
B1) un composant polyisocyanate, constitué d'un polyisocyanate ou d'un mélange de polyisocyanates liquéfié de la série du diphénylméthane , et
B2) un composant polyol d'une masse moléculaire moyenne de 500 à 18 000, constitué d'au moins un polyéther- et/ou polyesterpolyol contenant le cas échéant des charges organiques,
**caractérisé en ce que** le composant A2) possède une fonctionnalité de 4 à 8 et le composant B2) possède une fonctionnalité de 3 à 8, le composant A et le composant B réagissant dans un rapport stoechiométrique tel que l'indice d'isocyanate de l'élastomère obtenu se trouve dans la plage de 80 à 120 et le composant polyol B2) introduit par l'intermédiaire du composant B représente 10 à 90 moles % de la fraction uréthane.

7. Utilisation d'élastomères polyuréthane-urée produit selon la revendication 1 pour la préparation d'articles moulés en polyuréthane plats.
